# EUROPEAN PATENT SPECIFICATION

(11) **EP 4 343 944 B1**
(45) Date of publication and mention of the grant of the patent: **20.05.2026**
(21) Application number: 22911723.9
(22) Date of filing: 09.12.2022
(51) Int. Cl.: H01M 50/342, H01M 50/105, H01M 50/211

(54) **BATTERY CELL, AND BATTERY MODULE, BATTERY PACK, AND VEHICLE INCLUDING THE SAME**
BATTERIEZELLE, BATTERIEMODUL, BATTERIEPACK UND DAMIT AUSGESTATTETES FAHRZEUG
CELLULE DE BATTERIE, MODULE DE BATTERIE, BLOC-BATTERIE ET VÉHICULE LES COMPRENANT

(30) Priority: 24.12.2021 KR 20210187854; 28.04.2022 KR 20220053129
(43) Date of publication of application: 27.03.2024
(73) Proprietor: LG Energy Solution, Ltd., Seoul 07335 (KR)
(72) Inventor: PARK, Kyu-Tae, Daejeon 34122 (KR); KIM, Hye-Hyeon, Daejeon 34122 (KR); OH, Sang-Seung, Daejeon 34122 (KR); JO, Hyeon-Sung, Daejeon 34122 (KR)
(74) Representative: Plasseraud IP
(86) International application number: PCT/KR2022/020073
(87) International publication number: WO 2023/121090

(56) References cited:
- WO-A1-2021/201409
- KR-A- 20090 064 041
- KR-A- 20090 064 041
- KR-A- 20130 117 637
- KR-A- 20130 117 637
- KR-A- 20170 049 014
- KR-A- 20170 050 926
- KR-A- 20190 023 648
- KR-A- 20210 025 407

## Description

### TECHNICAL FIELD

The present disclosure relates to a battery cell, a battery module, a battery pack and a vehicle including the same, and more particularly, to a battery cell with enhanced stability, a battery module, a battery pack and a vehicle including the same.

### BACKGROUND ART

Recently, with the rapid increase in demand for portable electronic products such as laptop computers, video cameras and mobile phones and the extensive development of electric vehicles, accumulators for energy storage, robots and satellites, many studies are being conducted on high performance secondary batteries that can be repeatedly recharged.

Currently, commercially available secondary batteries include nickel-cadmium batteries, nickel-hydrogen batteries, nickel-zinc batteries, lithium secondary batteries and the like. Among them, lithium secondary batteries have little or no memory effect, and are gaining more attention than nickel-based secondary batteries as recharging can be done whenever it is convenient. Further, lithium secondary batteries provide a low self-discharge rate with high energy density capability.

The lithium secondary batteries mainly use lithium-based oxide and carbon material as a positive electrode active material and a negative electrode active material, respectively. In addition, the lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte.

According to the shape of the battery case, lithium secondary batteries may be classified into can-type secondary batteries in which the electrode assembly is included in a metal can and pouch-type secondary batteries in which the electrode assembly is included in a pouch made of an aluminum laminate sheet. In addition, the can-type secondary batteries may be sub-classified into cylindrical batteries and prismatic batteries according to the shape of the metal can.

Here, the pouch of the pouch-type secondary batteries may largely include a lower sheet and an upper sheet placed on the lower sheet. In this instance, the electrode assembly including the positive electrode and the negative electrode stacked and wound with the separator interposed therebetween is received in the pouch. In addition, after the electrode assembly is received, the edges of the upper sheet and the lower sheet are sealed by thermal fusion. In addition, an electrode tab drawn out from each electrode may be coupled to an electrode lead, and an insulating film may be attached to the electrode lead at an area of contact with the sealing portion.

As described above, the pouch-type secondary batteries may have flexibility such that they can be designed with diversity. In addition, the pouch-type secondary batteries achieve the same capacity with a smaller volume and mass. A prior art battery cell is disclosed in WO 2021/201409 A1.

The lithium secondary batteries having the above-described advantages are used to manufacture a battery module or a battery pack including a plurality of battery cells stacked or laid on top of each other, with or without a cartridge accommodating the battery cells to form a dense structure, and then electrically connected to each other, to provide high voltage and high current.

In the battery pack configuration, one of the most important issues is safety. In particular, when a thermal event occurs even in any one of the plurality of battery cells included in the battery pack, it is necessary to suppress the propagation of the thermal event to the other battery cells. In case that the heat propagation between the battery cells is not properly suppressed, this may lead to thermal events of the other battery cells included in the battery pack, causing graver problems, such as fires or explosions in the battery pack. Moreover, fires or explosions in the battery pack may cause loss of human life or economic damage. Accordingly, there is a need for an approach to properly control the thermal event in the battery pack.

### DISCLOSURE

### Technical Problem

The present disclosure is directed to providing a battery cell, a battery module, a battery pack and a vehicle configured to guide venting gas to be discharged in a desired direction when a thermal event occurs.

The technical problem to be solved by the present disclosure is not limited thereto, and these and other problems will be clearly understood by those skilled in the art from the following disclosure.

### Technical Solution

To achieve the above-described objective, the invention provides a battery cell according to claim 1.

The battery cell according to the invention may present one or more feature(s) of dependent claims 2 to 11, in any combination allowed by the claims.

The invention also provides a battery module according to claim 12, a battery pack according to claim 13 and a vehicle according to claim 14.

### Advantageous Effects

According to an embodiment of the present disclosure, it is possible to reduce the likelihood of a fire occurring in the battery cell, thereby enhancing the structural stability of the battery cell.

In addition, since venting gas may be guided to be discharged in the portion of the cell case other than the fragile site to which the venting guide unit is coupled, it is possible to achieve the discharge of venting gas in a desired direction.

Moreover, according to various embodiments of the present disclosure, many other additional effects may be achieved. The effects of the present disclosure will be described in detail in each embodiment, and description of certain effects that can be easily understood by those skilled in the art is omitted.

### DESCRIPTION OF DRAWINGS

The accompanying drawings illustrate an exemplary embodiment of the present disclosure, and together with the following detailed description, serve to provide a further understanding of the technical aspect of the present disclosure, and thus, the present disclosure should not be construed as being limited to the drawings.
FIG. 1 is a diagram of a battery cell according to an embodiment of the present disclosure.
FIG. 2 is a front view of the battery cell of FIG. 1.
FIG. 3 is a diagram showing the detailed structure of the battery cell of FIG. 1.
FIG. 4 is a diagram showing a venting process when thermal runaway occurs in the battery cell of FIG. 1.
FIG. 5 is a diagram showing a venting process when thermal runaway occurs in a conventional battery cell.
FIG. 6 is a diagram showing a voltage change and a temperature change with time in FIG. 5.
FIG. 7 is a diagram of a battery cell according to another embodiment of the present disclosure.
FIGS. 8 and 9 are diagrams of a battery cell according to another embodiment of the present disclosure.
FIG. 10 is a diagram of a battery module including a battery cell of the present disclosure.
FIG. 11 is a diagram of a battery pack including the battery module of FIG. 9.
FIG. 12 is a diagram of a vehicle including the battery pack of FIG. 10.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiment described herein and illustration in the accompanying drawings is an exemplary embodiment of the present disclosure, and does not fully represent the technical aspect of the present disclosure, so it should be understood that a variety of other equivalents and modifications could have been made thereto at the time of filing the patent application.

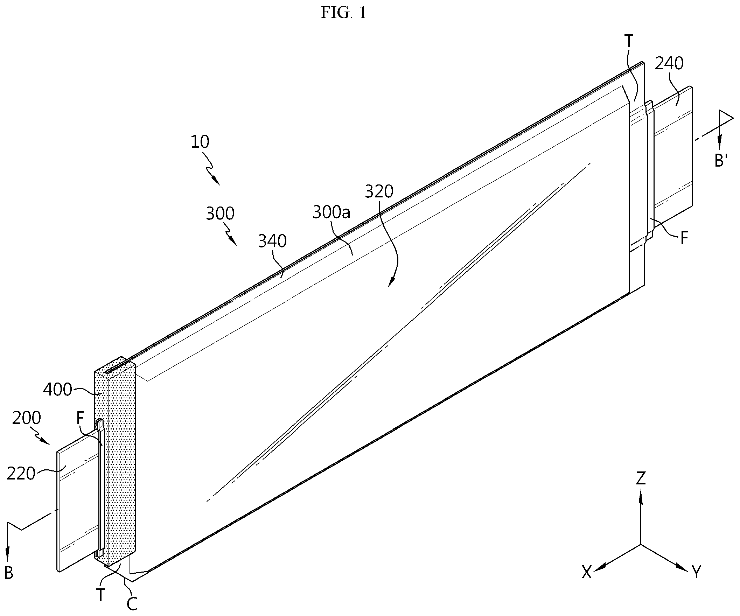

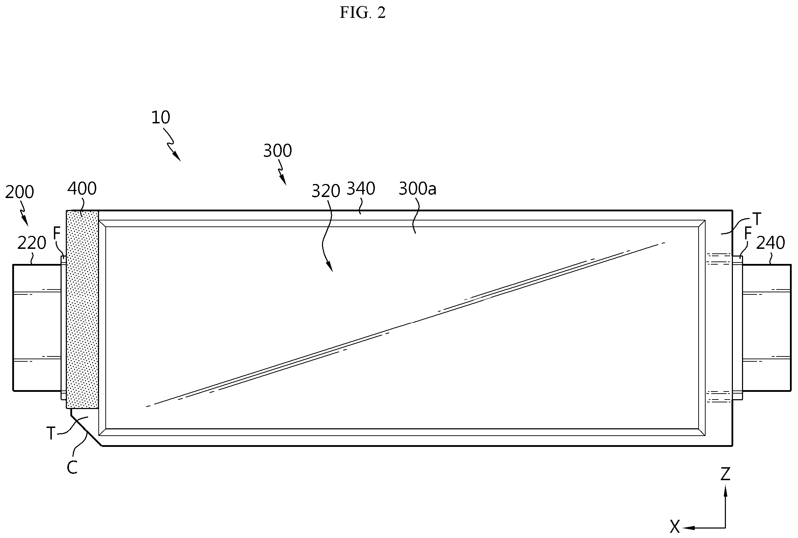

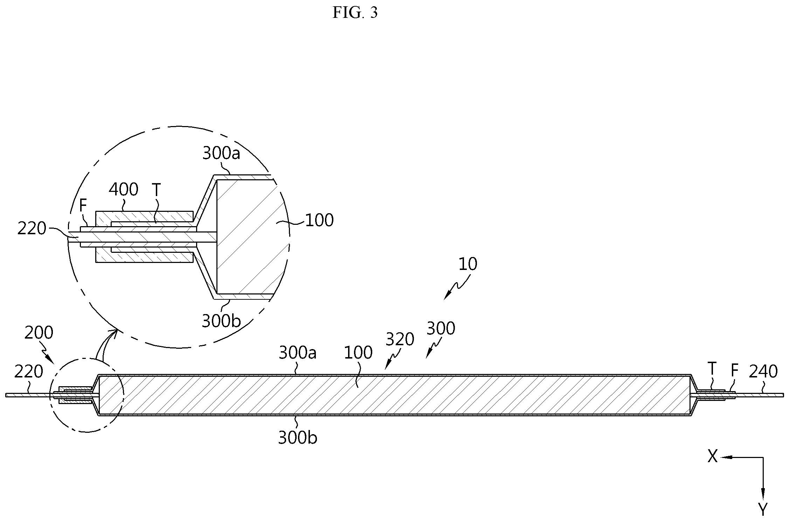

FIG. 1 is a diagram of a battery cell 10 according to an embodiment of the present disclosure, FIG. 2 is a front view of the battery cell 10 of FIG. 1, and FIG. 3 is a diagram showing the detailed structure of the battery cell 10 of FIG. 1. In this instance, FIG. 3 is a cross-sectional view of the battery cell 10 of FIG. 1, taken along the line B-B' on the XY plane and viewed from the bottom.

In an embodiment of the present disclosure, the X-axis direction shown in the drawings may refer to a longitudinal direction of the battery cell 10, the Y-axis direction may refer to a front and rear direction of the battery cell 10 perpendicular to the X-axis direction on the horizontal plane (XY plane), and the Z-axis direction may refer to an up and down direction perpendicular to both the X-axis direction and the Y-axis direction.

Referring to FIGS. 1 to 3, the battery cell 10 according to an embodiment of the present disclosure may include an electrode assembly 100, an electrode lead 200, a cell case 300, and a venting guide unit 400.

The battery cell 10 may be a secondary battery. The battery cell 10 may be a pouch-type battery cell.

Although not shown in detail, the electrode assembly 100 may include a first electrode plate having a first polarity, a second electrode plate having a second polarity, and a separator between the first electrode plate and the second electrode plate. In an example, the first electrode plate may be a positive electrode plate or a negative electrode plate, and the second electrode plate may correspond to an electrode plate having a polarity opposite to that of the first electrode plate.

The electrode lead 200 may be electrically connected to the electrode assembly 100. The electrode lead 200 may be connected to only one side or two sides of the electrode assembly 100 in the longitudinal direction.

In an example, the electrode lead 200 may include a first lead 220 and a second lead 240. The first lead 220 may extend away from the cell case 300 through a side, and the second lead 240 may extend away from the cell case 300 through an opposite side.

The first lead 220 may be connected to the first electrode plate and may be positive or negative. In addition, the second lead 240 may be connected to the second electrode plate and may be positive or negative.

The cell case 300 may accommodate the electrode assembly 100 therein. That is, the cell case 300 may include an accommodation space in which the electrode assembly 100 is received. In this instance, the cell case 300 accommodates an electrolyte therein, and the electrode assembly 100 impregnated with the electrolyte may be received in the cell case 300. In an example, the cell case 300 may include a metal material (for example, aluminum (Al)), but is not limited thereto.

In addition, the cell case 300 may be configured to support the electrode lead 200. In this instance, the electrode lead 200 may protrude out of the cell case 300 by a predetermined length. Although not shown, a lead film F may be interposed between the electrode lead 200 and the cell case 300 to form a seal between the electrode lead 200 and the cell case 300.

The venting guide unit 400 may be disposed in the cell case 300 and configured to guide venting gas to be discharged from a predetermined region of the cell case 300 when the internal pressure of the cell case 300 rises.

In the battery cell 10 of the present disclosure, an event such as thermal runaway may occur. In this case, high-temperature and high-pressure venting gas may be generated inside the cell case 300. In case that venting gas is inappropriately discharged from the cell case 300, the likelihood of a fire occurring in the battery cell 10 may increase as oxygen may be introduced into the cell case 300 through a portion of the cell case 300 where the internal pressure is lowered due to the discharge of the venting gas.

In order to solve this problem, the venting guide unit 400 of the present disclosure may be disposed in the cell case 300 to guide venting gas to be discharged from the predetermined region of the cell case 300 as described above. That is, when thermal runaway occurs in the cell case 300, the venting guide unit 400 may guide and direct the flow of venting gas to the other portion than the portion of the cell case 300 to which the venting guide unit 400 is coupled.

Accordingly, the venting guide unit 400 may guide the discharge of venting gas by inducing the rupture of the predetermined region of the cell case 300. When high-pressure venting gas is discharged from the certain region of the cell case 300, it is possible to minimize the introduction of oxygen into the cell case 300 through the portion of the cell case 300 where venting gas is discharged.

According to this embodiment of the present disclosure, it is possible to minimize the introduction of oxygen into the cell case 300 by guiding venting gas to be discharged from the predetermined region. Accordingly, it is possible to reduce the likelihood of a fire occurring in the battery cell 10, thereby enhancing the structural stability of the battery cell 10.

In particular, the venting guide unit 400 may include a material that hardens by heat conduction as the internal temperature of the cell case 300 rises. In an example, the venting guide unit 400 may include clay that becomes hard when heated for a specific time, but is not limited thereto.

Meanwhile, a portion of the cell case 300 having the venting guide unit 400 may be a fragile site that is more easily damaged than the rest of cell case 300 by high-pressure venting gas discharged from the inside of the cell case 300. The fragile site will be described in more detail below.

In this instance, the venting guide unit 400 may stably bind the fragile site by including the material that hardens by heat conduction. Accordingly, the venting guide unit 400 may prevent venting gas from being discharged to the outside of the cell case 300 through the fragile site.

Hereinafter, the venting guide unit 400 will be described in more detail.

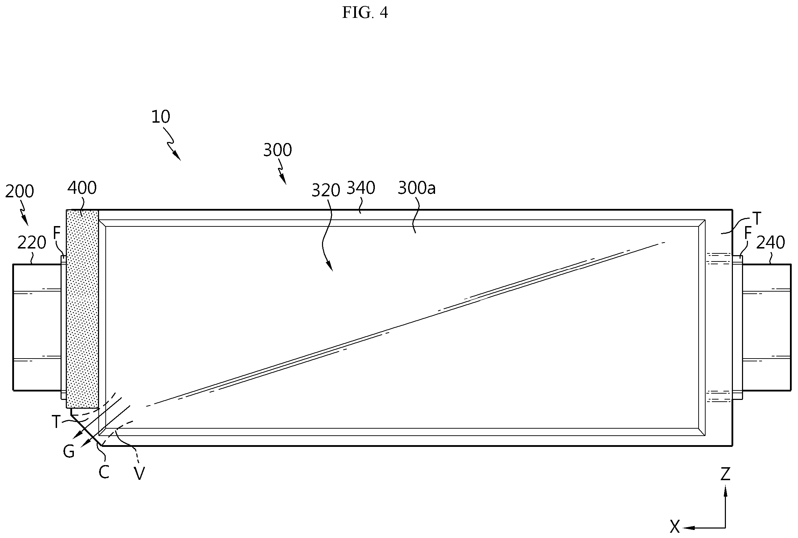

FIG. 4 is a diagram showing a venting process when thermal runaway occurs in the battery cell 10 of FIG. 1. In this instance, in FIG. 4, venting gas is indicated by the reference sign 'G'.

Referring to FIGS. 1 to 4, the venting guide unit 400 may be, for example, disposed on one side of the cell case 300. The venting guide unit 400 may be coupled to a partial region of the surface of the cell case 300.

In this instance, to create a thermal runaway environment of the battery cell 10, after increasing the temperature of the battery cell 10 from 25°C to 150°C at the rate of 5°C/min, the battery cell 10 was heated at about 150°C for 1 hour.

In this instance, a venting channel V through which venting gas is discharged when the internal pressure of the cell case 300 rises due to the battery cell 10 being heated may be formed at the other portion than the portion of the cell case 300 to which the venting guide unit 400 is coupled. The venting channel V may be formed adjacent to the venting guide unit 400. For example, the venting channel V may be formed at the corner area of the cell case 300.

That is, the venting guide unit 400 may guide and direct the flow of venting gas to the portion of the cell case 300 other than the fragile site by stably binding the fragile site. Accordingly, the venting guide unit 400 may guide venting gas to be discharged from the portion other than the fragile site by inducing the rupture of the portion of the cell case 300 other than the fragile site.

Referring to FIGS. 1 to 4 again, the cell case 300 may include an accommodation portion 320 configured to accommodate the electrode assembly 100 therein and a sealing portion 340 extended outward by a predetermined length from the periphery of the accommodation portion 320. The sealing portion 340 may include a case terrace T on each of a side and an opposite side. Meanwhile, the cell case 300 may include a first case member 300a and a second case member 300b. The peripheral edge areas of the first case member 300a and the second case member 300b may be joined in contact with each other by thermal fusion to form the sealing portion 340. A space formed inside the sealing portion 340 by the first case member 300a and the second case member 300b spaced apart from each other provides the accommodation portion 320.

The case terrace T may refer to a region disposed in a direction in which the electrode lead 200 is drawn out of the cell case 300 in the entire sealing portion 340.

That is, the case terrace T may be extended by a predetermined length from the accommodation portion 320 and configured to support the electrode lead 200. In this instance, the lead film F may form a seal between the electrode lead 200 and the cell case 300. Specifically, the lead film F may be interposed between the electrode lead 200 and the case terrace T.

Meanwhile, the venting guide unit 400 may be disposed in the case terrace T. In this instance, a portion of the case terrace T supporting the electrode lead 200 may correspond to the fragile site. That is, since the electrode lead 200 is interposed between a side (for example, a front side) and an opposite side (for example, a rear side) of the case terrace T, the portion of the case terrace T supporting the electrode lead 200 may be structurally weaker than the other portion of the cell case 300. In order to reinforce the structural weakness of the fragile site, the venting guide unit 400 may be disposed in a region of the case terrace T including the portion where the electrode lead 200 is disposed.

Since the venting guide unit 400 is disposed in the portion of the case terrace T supporting the electrode lead 200 as described above, it is possible to prevent venting gas from being discharged through the portion of the cell case 300 where the electrode lead 200 is disposed, and guide venting gas to be discharged from the region of the cell case 300 except the portion where the electrode lead 200 is disposed.

In particular, the venting guide unit 400 may be coupled to the portion of the case terrace T where the electrode lead 200 is disposed. In an example, the venting guide unit 400 may be coupled to at least one of the portion of the case terrace T where the first lead 220 is disposed or the portion of the case terrace T where the second lead 240 is disposed.

That is, when the venting guide unit 400 is only coupled to the portion of the case terrace T where the electrode lead 200 is disposed, a smaller venting guide unit 400 may be formed.

The venting guide unit 400 may be configured to be coupled across the side of the case terrace T and the opposite side of the case terrace T in the cell case 300.

Accordingly, in the region of the case terrace T supporting the electrode lead 200, it is possible to bind the first case member 300a and the second case member 300b more stably to avoid damage to the sealing, thereby preventing venting gas from being discharged through the region of the cell case 300 where the electrode lead 200 is disposed or its adjacent region more effectively.

In addition, as shown in FIGS. 1 to 3, the venting guide unit 400 may be configured to cover not only a part of the cell case 300 but also a part of the lead film F between the electrode lead 200 and the case terrace T. According to this configuration of the present disclosure, it is possible to effectively prevent the deterioration of sealability in the region where the electrode lead 200 is drawn due to rises in temperature and/or internal pressure.

Although not shown in the drawings, the venting guide unit 400 may be configured to cover not only a part of the cell case 300 but also a part of the electrode lead 200. According to this configuration of the present disclosure, it is possible to prevent more effectively the deterioration of sealability in the region where the electrode lead 200 is drawn due to rises in temperature and/or internal pressure.

The venting guide unit 400 is configured to facilitate the formation of the venting channel V through which venting gas is discharged when the internal pressure of the cell case 300 rises in the portion of the case terrace T other than the portion to which the venting guide unit 400 is coupled. The venting guide unit 400 may include an opening to allow first electrode lead 220 to extend through the venting guide unit 400.

That is, as the venting guide unit 400 may be coupled to the partial region of the case terrace T as described above, the venting guide unit 400 may guide and direct the flow of venting gas to the portion of the case terrace T other than the portion to which the venting guide unit 400 is coupled. Accordingly, the venting channel V may be formed in the portion of the case terrace T other than the portion to which the venting guide unit 400 is coupled.

According to this embodiment of the present disclosure, the venting channel V may be formed in the case terrace T at the edge of the cell case 300. Therefore, it is possible to minimize damage to the cell case 300 and discharge venting gas to the outside of the cell case 300 more stably, compared to the venting channel V formed in other portions of the cell case 300.

Meanwhile, the venting guide unit 400 may be configured to facilitate the formation of the venting channel V in the corner portion of the case terrace T when the internal pressure of the cell case 300 rises.

Specifically, the venting channel V may be formed in the corner portion C of the case terrace T disposed below the electrode lead 200 when the internal pressure of the cell case 300 rises, and although not shown in detail, may be formed in the corner portion of the case terrace T disposed above the electrode lead 200. In this instance, the venting guide unit 400 may be disposed in a region of the case terrace T except the corner portion C of the case terrace T disposed below the electrode lead 200, and may be disposed in a region of the case terrace T except the corner portion of the case terrace T disposed above the electrode lead 200.

Accordingly, the venting guide unit 400 may further minimize the introduction of oxygen into the cell case 300 by guiding venting gas to be discharged from the corner portion of the case terrace T, which is a partial region of the case terrace T.

Preferably, the venting channel V may be formed in the corner portion C of the case terrace T disposed below the electrode lead 200 when the internal pressure of the cell case 300 rises. That is, when the venting channel V is formed in the corner portion C of the case terrace T disposed below the electrode lead 200, it is possible to guide venting gas to be discharged in the downward direction of the cell case 300, thereby minimizing the venting gas flowing back into the cell case 300.

In particular, at least some of the corner portions of the case terrace T may be chamfered.

In this instance, stress concentration may occur at the chamfered corner portion of the case terrace T compared to the other portions of the cell case 300. That is, the flow of venting gas may be more concentrated in the chamfered corner portion of the case terrace T than the other portions of the cell case 300. When the corner portion of the case terrace T is chamfered, the sealing width at the chamfered portion may be smaller than those of the other portions. Accordingly, the venting channel V may be more easily formed in the chamfered corner portion of the case terrace T when the internal pressure of the cell case 300 rises.

According to this embodiment of the present disclosure, it is possible to form the venting channel V in the case terrace T more easily when thermal runaway occurs in the battery cell 10.

In particular, the corner portion C of the case terrace T disposed below the electrode lead 200 may be chamfered. Alternatively, although not shown in detail, the corner portion C of the case terrace T disposed above the electrode lead 200 may be chamfered.

In this case, it is possible to discharge venting gas in the downward direction of the cell case 300, thereby suppressing the flow of venting gas in the upward direction and guiding the discharge direction of the venting gas in a more constant direction.

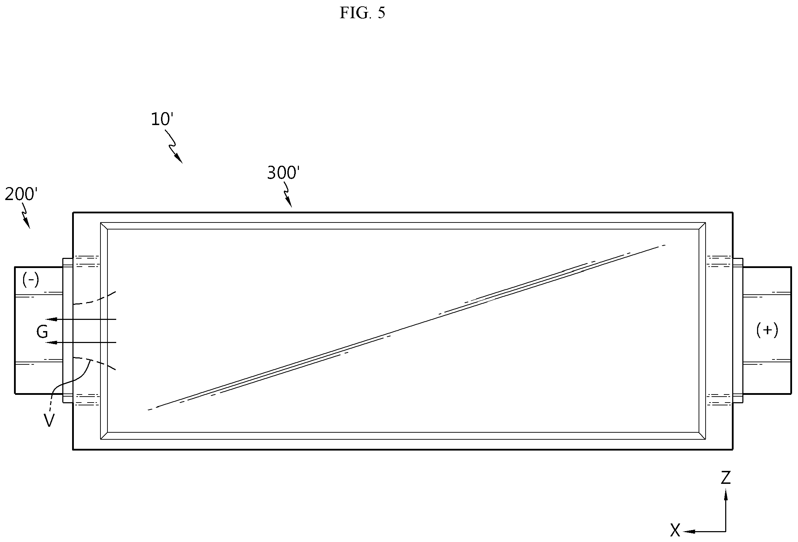

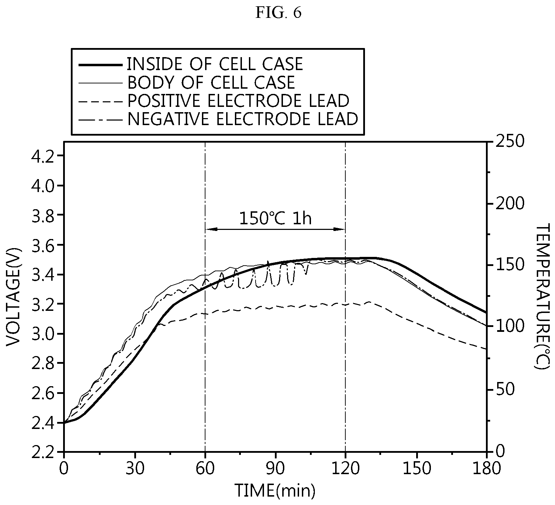

FIG. 5 is a diagram showing a venting process when thermal runaway occurs in a conventional battery cell 10', and FIG. 6 is a diagram showing a voltage change and a temperature change with time in FIG. 5. In this instance, venting gas is indicated by the reference sign 'G.'.

Referring to FIG. 5, the conventional battery cell 10' includes an electrode assembly (not shown), an electrode lead 200', and a cell case 300'.

In this instance, to create a thermal runaway environment of the conventional battery cell 10', after increasing the temperature of the battery cell 10' from 25°C to 150°C at the rate of 5°C/min, the battery cell 10' was heated at 150°C for 1 hour.

In this instance, a venting channel V through which venting gas is discharged is formed in a portion of the cell case 300' where the electrode lead 200' is supported. That is, in the conventional battery cell 10', venting gas is discharged toward the electrode lead 200'.

In this case, as shown in FIG. 6, it is found that a temperature difference and a voltage difference between the positive electrode lead and the negative electrode lead of the electrode lead 200' are large. Thus, when thermal runaway occurs in the battery cell 10', there is a high possibility that venting gas is discharged in a region where the negative electrode lead is drawn out from the cell case 300'.

In contrast, in the battery cell 10 of the present disclosure, the discharge of venting gas toward the electrode lead 200 may be suppressed by the venting guide unit 400. For example, when the first lead 220 is a negative lead, the discharge of venting gas toward the first lead 220 may be suppressed by the venting guide unit 400. Accordingly, the venting guide unit 400 may be preferably coupled to the portion of the case terrace T where the negative lead is disposed.

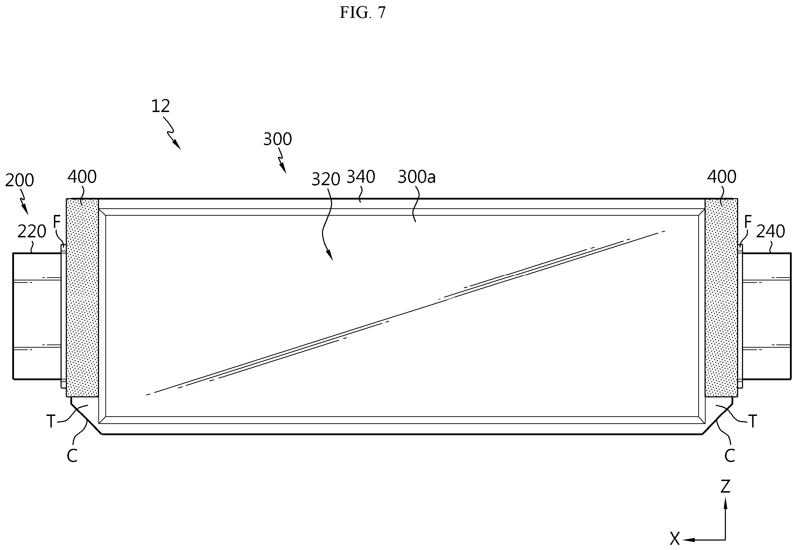

FIG. 7 is a diagram showing a battery cell 12 according to another embodiment of the present disclosure.

The battery cell 12 according to this embodiment is similar to the battery cell 10 of the previous embodiment, and redundant descriptions of the components that are substantially identical or similar to those of the previous embodiment are omitted and the following description is made based on differences between this embodiment and the previous embodiment.

Referring to FIG. 7, the battery cell 12 may include two venting guide units 400, each in the case terrace T on each of the two sides of the cell case 300 in the longitudinal direction.

Specifically, the electrode lead 200 may include a first electrode lead 220 and a second electrode lead 240, and the first lead 220 and the second lead 240 may be respectively disposed on the two sides of the cell case 300 in the longitudinal direction.

That is, the venting guide unit 400 may be coupled to both the portion of the case terrace T where the first lead 220 is disposed and the portion of the case terrace T where the second lead 240 is disposed.

In this case, the venting guide unit 400 may prevent venting gas from being discharged through the portion where the electrode lead 200 is disposed on the two sides of the cell case 300 in the longitudinal direction when thermal runaway occurs in the battery cell 12, and may guide venting gas to be discharge from the case terraces T on the two sides of the cell case 300 in the longitudinal direction, thereby achieving stable and fast discharge of venting gas.

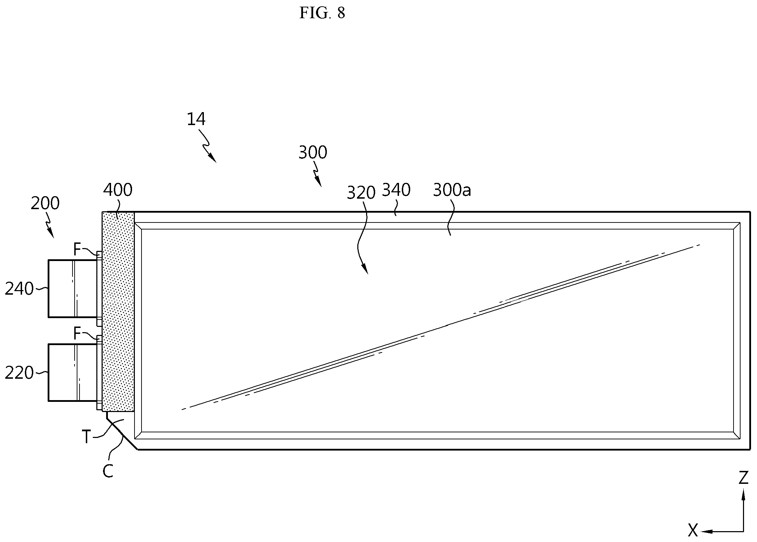

FIG. 8 is a diagram showing a battery cell 14 according to another embodiment of the present disclosure.

The battery cell 14 according to this embodiment is similar to the battery cell 10 of the previous embodiment, and redundant descriptions of the components that are substantially identical or similar to those of the previous embodiment are omitted and the following description is made based on differences between this embodiment and the previous embodiment.

Referring to FIG. 8, as opposed to the previous embodiment, the battery cell 14 may include the electrode lead 200 on only one side of the cell case 300 in the longitudinal direction.

Specifically, the electrode lead 200 may include the first electrode lead 220 and the second electrode lead 240, and the first lead 220 and the second lead 240 may be disposed on only one side of the cell case 300 in the longitudinal direction. The first lead 220 and the second lead 240 may be extended through the venting guide unit 400 coupled to one side of the battery cell 14.

In this case, the venting guide unit 400 may be disposed in the case terrace T on one side of the cell case 300 in the longitudinal direction, thereby preventing venting gas from being discharged through the portion where the first lead 220 and the second lead 240 are disposed on the side of the cell case 300 in the longitudinal direction. Additionally, the discharge of venting gas toward the electrode lead 200 may be suppressed by the venting guide unit 400 disposed in the case terrace T on only one side of the cell case 300 in the longitudinal direction, thereby minimizing the manufacturing cost of the venting guide unit 400.

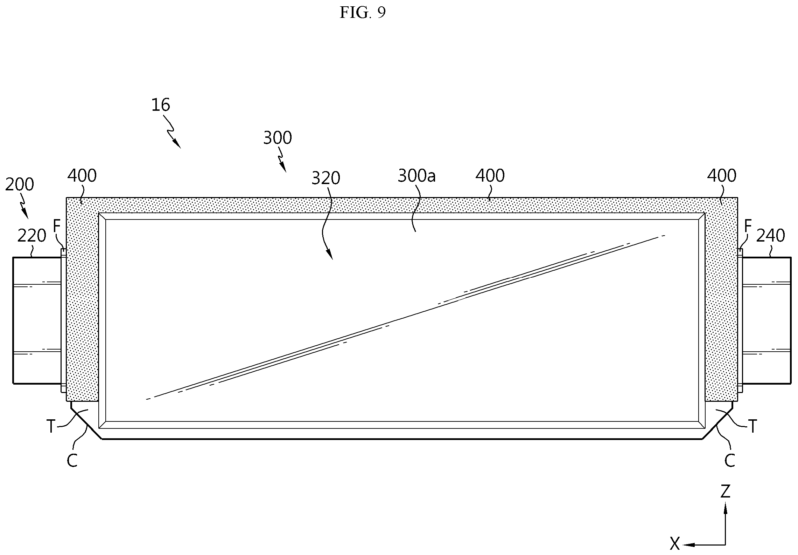

FIG. 9 is a diagram of a battery cell according to another embodiment of the present disclosure. The battery cell 16 according to this embodiment is similar to the battery cell 12 of the previous embodiment, and redundant descriptions of the components that are substantially identical or similar to those of the previous embodiment are omitted and the following description is made based on differences between this embodiment and the previous embodiment.

Referring to FIGS. 2, 3 and 9, in addition to the first venting guide unit 400 and the second venting guide unit 400 respectively coupled to one side and the opposite side of the battery cell 12 in the longitudinal direction (parallel to the X axis) according to the previous embodiment, the battery cell 16 may further include a third venting guide unit 400 on at least one of one side or the opposite side of the battery cell 16 in the widthwise direction (parallel to the Z axis). The first venting guide unit 400 may be coupled to the case terrace T on one side of the battery cell 12, 16 in the longitudinal direction. The second venting guide unit 400 may be coupled to the case terrace T on the opposite side of the battery cell 12, 16 in the longitudinal direction. The third venting guide unit 400 may be coupled to the sealing portion 340 connecting the pair of case terraces T. Referring to FIGS. 2, 3 and 9, the cell case 300 may include the first case member 300a and the second case member 300b integrally connected to each other and folded on any one of one side and the opposite side in the widthwise direction. In this case, the third venting guide unit 400 may be disposed in the other one of one side and the opposite side of the battery cell 16 in the widthwise direction, where the first case member 300a and the second case member 300b are not integrally connected to each other.

According to this configuration, as the venting guide unit 400 is coupled to the region except the fragile site (for example, the chamfered corner portion C) in the sealing portion 340 at which the first case member 300a and the second case member 300b are joined in contact with each other, it is possible to perform control to guide the discharge of venting gas through the fragile site. Additionally, as it is possible to control the venting location, it is possible to achieve gas venting at a location away from the electrode leads 220, 240, thereby improving safety.

As described above, according to an embodiment of the present disclosure, it is possible to reduce the likelihood of a fire occurring in the battery cell 10, 12, 14 and 16, thereby enhancing the structural stability of the battery cell 10, 12, 14, and 16.

Further, as the discharge of venting gas may be guided to the portion of the cell case 300 other than the fragile site to which the venting guide unit 400 is coupled, it is possible to achieve the discharge of venting gas in the desired direction.

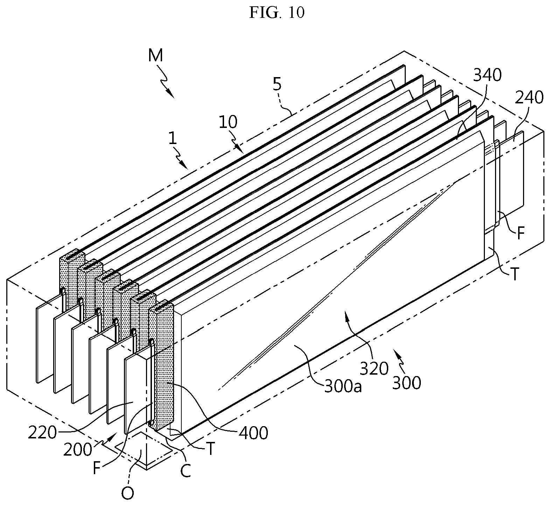

FIG. 10 is a diagram of a battery module M including the battery cell 10 of the present disclosure.

Referring to FIG. 10, at least one battery cell 10 according to the present disclosure may form the battery module M. The battery module M according to the present disclosure may include at least one battery cell 10 according to the present disclosure. Specifically, the at least one battery cell 10 may form a cell assembly 1, and the cell assembly 1 may be received in a module case 5.

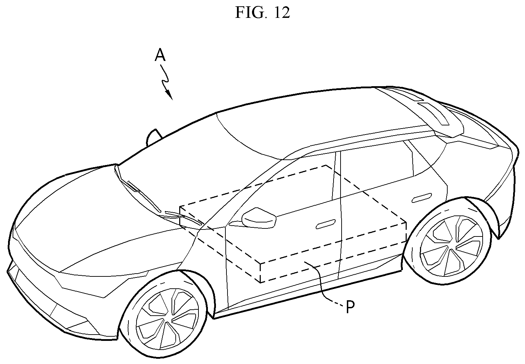

The module case 5 may have a venting hole O in the lower side, and the venting hole O may be disposed adjacent to the corner portion C of the case terrace T below the electrode lead 200. Accordingly, when an event such as thermal runaway occurs in the battery cell 10, venting gas discharged through the venting path V may be easily discharged to the outside of the module case 5 through the venting hole O. In addition, since venting gas is discharged in the downward direction of the module case 5, it is possible to prevent venting gas from being discharged toward a driver in a vehicle A (see FIG. 12) as described below.

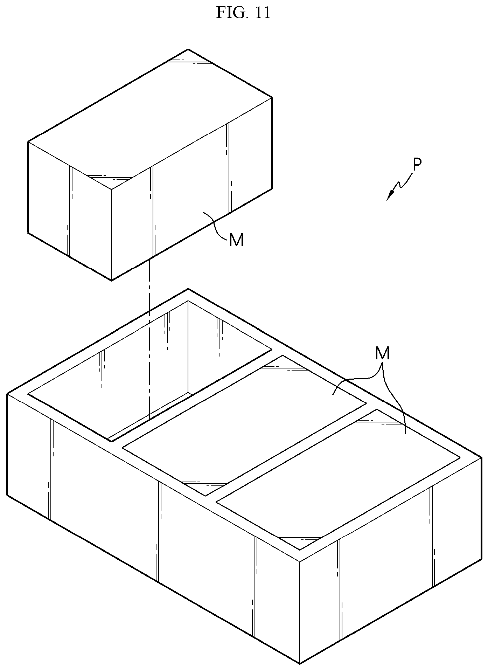

FIG. 11 is a diagram of a battery pack P including the battery module M of FIG. 10.

Referring to FIG. 11, at least one battery module M according to the present disclosure may form the battery pack P. The battery pack P according to the present disclosure may include at least one battery module M according to the present disclosure. In addition, the battery pack P may further include a pack case accommodating the battery module M therein and various devices for controlling the charging and discharging of the battery pack P, for example, a battery management system (BMS), a current sensor, a fuse, etc.

FIG. 12 is a diagram of the vehicle A including the battery pack P of FIG. 11.

Referring to FIG. 12, the battery pack P according to the present disclosure may be applied to the vehicle A, such as an electric vehicle. The vehicle A according to the present disclosure may include at least one battery pack P according to the present disclosure.

While the present disclosure has been hereinabove described with regard to a limited number of embodiments and drawings, the present disclosure is not limited thereto, and it is apparent that a variety of changes and modifications may be made by those skilled in the art within the scope of the present disclosure and the appended claims.

Terms indicating directions such as "upper", "lower", "left", "right", "front" and "rear" are used herein for convenience only, and it should be obvious to those skilled in the art that these terms may change depending on the position of the stated element or an observer.

### [Reference Signs]

A: Vehicle
P: Battery pack
M: Battery module
1: Cell assembly
5: Module case
10, 12, 14, 16: Battery cell
100: Electrode assembly
200: Electrode lead
300: Cell case
320: Accommodation portion
340: Sealing portion
T: Case terrace
V: Venting channel
400: Venting guide unit

## Claims

1. A battery cell (10, 12, 14, 16), comprising:
an electrode assembly (100);
an electrode lead (200) connected to the electrode assembly (100);
a cell case (300) accommodating the electrode assembly (100), and configured to support the electrode lead (200); and
a venting guide unit (400) disposed in the cell case (300), and configured to guide a venting gas to be discharged through a predetermined region of the cell case (300) when an internal pressure of the cell case (300) rises,
wherein the cell case (300) includes an accommodation portion (320) accommodating the electrode assembly (100) and a sealing portion (340) extending from the accommodation portion (320) by a predetermined length, and
wherein the venting guide unit (400) is disposed in a case terrace (T), the case terrace (T) being a region of the sealing portion (340) disposed in a direction in which the electrode lead (200) is drawn out,
**characterized in that** the venting guide unit (400) is configured to facilitate formation of a venting channel (V) in a portion of the case terrace (T) other than a portion to which the venting guide unit (400) is coupled, the venting gas being discharged through the venting channel (V) when the internal pressure of the cell case (300) rises.

2. The battery cell (10, 12, 14, 16) according to claim 1, wherein the venting guide unit (400) includes a material that hardens by heat conduction with rising temperature inside the cell case (300).

3. The battery cell (10, 12, 14, 16) according to claim 1, wherein the venting guide unit (400) is coupled to a portion of the case terrace (T) where the electrode lead (200) is disposed.

4. The battery cell (10, 12, 14, 16) according to claim 1, wherein the venting guide unit (400) is configured to be coupled across a side of the case terrace (T) and an opposite side of the case terrace (T) in the cell case (300).

5. The battery cell (10, 12, 14, 16) according to claim 4, wherein the venting guide unit (400) is configured to cover a part of a lead film (F) between the electrode lead (200) and the case terrace (T).

6. The battery cell (10, 12, 14, 16) according to claim 4, wherein the venting guide unit (400) is configured to cover a part of the electrode lead (200).

7. The battery cell (10, 12, 14, 16) according to claim 1, wherein the venting guide unit (400) is configured to facilitate the formation of the venting channel (V) in a corner portion of the case terrace (T) when the internal pressure of the cell case (300) rises.

8. The battery cell (10, 12, 14, 16) according to claim 7, wherein at least some of the corner portions of the case terrace (T) are chamfered.

9. The battery cell (10, 12, 14, 16) according to claim 8, wherein the corner portion of the case terrace (T) disposed below the electrode lead (200) is chamfered.

10. The battery cell (10, 12, 14, 16) according to claim 8, wherein the venting guide unit (400) includes:
a first venting guide unit coupled to the case terrace (T) disposed on a side of the battery cell (10, 12, 14, 16) in a longitudinal direction; and
a second venting guide unit coupled to the case terrace (T) disposed on an opposite side of the battery cell (10, 12, 14, 16) in the longitudinal direction.

11. The battery cell (10, 12, 14, 16) according to claim 10, wherein the venting guide unit (400) further includes a third venting guide unit coupled to a portion of the sealing portion (340) connecting the case terrace (T) disposed on the side of the battery cell (10, 12, 14, 16) in the longitudinal direction to the case terrace (T) disposed on the opposite side of the battery cell (10, 12, 14, 16) in the longitudinal direction.

12. A battery module (M) comprising at least one battery cell (10, 12, 14, 16) according to any one of claims 1 to 11.

13. A battery pack (P) comprising at least one battery module (M) according to claim 12.

14. A vehicle (A) comprising at least one battery pack (P) according to claim 13.

## Patentansprüche

1. Batteriezelle (10, 12, 14, 16), umfassend:
eine Elektrodenanordnung (100);
eine Elektrodenleitung (200), welche mit der Elektrodenanordnung (100) verbunden ist;
ein Zellengehäuse (300), welches die Elektrodenanordnung (100) aufnimmt und dazu eingerichtet ist, die Elektrodenleitung (200) zu haltern; und
eine Entlüftungsleiteinheit (400), welche in dem Zellengehäuse (300) angeordnet ist und dazu eingerichtet ist, ein Entlüftungsgas zu leiten, welches durch einen vorbestimmten Bereich des Zellengehäuses (300) abgeleitet werden soll, wenn ein Innendruck des Zellengehäuses (300) ansteigt,
wobei das Zellengehäuse (300) einen Aufnahmeabschnitt (320), welcher die Elektrodenanordnung (100) aufnimmt, und einen Dichtungsabschnitt (340) umfasst, welcher sich um eine vorbestimmte Länge von dem Aufnahmeabschnitt (320) erstreckt, und
wobei die Entlüftungsleiteinheit (400) in einer Gehäuseterrasse (T) angeordnet ist, wobei die Gehäuseterrasse (T) ein Bereich des Dichtungsabschnitts (340) ist, welcher in einer Richtung angeordnet ist, in welcher die Elektrodenleitung (200) herausgeführt ist,
**dadurch gekennzeichnet, dass** die Entlüftungsleiteinheit (400) dazu eingerichtet ist, eine Bildung eines Entlüftungskanals (V) in einem Abschnitt der Gehäuseterrasse (T) zu erleichtern, welcher von einem Abschnitt verschieden ist, mit welchem die Entlüftungsleiteinheit (400) gekoppelt ist, wobei das Entlüftungsgas durch den Entlüftungskanal (V) abgeleitet wird, wenn der Innendruck des Zellengehäuses (300) ansteigt.

2. Batteriezelle (10, 12, 14, 16) nach Anspruch 1, wobei die Entlüftungsleiteinheit (400) ein Material umfasst, welches durch Wärmeleitung bei steigender Temperatur innerhalb des Zellengehäuses (300) aushärtet.

3. Batteriezelle (10, 12, 14, 16) nach Anspruch 1, wobei die Entlüftungsleiteinheit (400) mit einem Abschnitt der Gehäuseterrasse (T) gekoppelt ist, an welchem die Elektrodenleitung (200) angeordnet ist.

4. Batteriezelle (10, 12, 14, 16) nach Anspruch 1, wobei die Entlüftungsleiteinheit (400) dazu eingerichtet ist, über eine Seite der Gehäuseterrasse (T) und eine entgegengesetzte Seite der Gehäuseterrasse (T) in dem Zellengehäuse (300) gekoppelt zu sein.

5. Batteriezelle (10, 12, 14, 16) nach Anspruch 4, wobei die Entlüftungsleiteinheit (400) dazu eingerichtet ist, einen Teil einer Leitungsfolie (F) zwischen der Elektrodenleitung (200) und der Gehäuseterrasse (T) abzudecken.

6. Batteriezelle (10, 12, 14, 16) nach Anspruch 4, wobei die Entlüftungsleiteinheit (400) dazu eingerichtet ist, einen Teil der Elektrodenleitung (200) abzudecken.

7. Batteriezelle (10, 12, 14, 16) nach Anspruch 1, wobei die Entlüftungsleiteinheit (400) dazu eingerichtet ist, die Bildung des Entlüftungskanals (V) in einem Eckabschnitt der Gehäuseterrasse (T) zu erleichtern, wenn der Innendruck des Zellengehäuses (300) ansteigt.

8. Batteriezelle (10, 12, 14, 16) nach Anspruch 7, wobei wenigstens einige der Eckabschnitte der Gehäuseterrasse (T) abgeschrägt sind.

9. Batteriezelle (10, 12, 14, 16) nach Anspruch 8, wobei der Eckabschnitt der Gehäuseterrasse (T), welcher unterhalb der Elektrodenleitung (200) angeordnet ist, abgeschrägt ist.

10. Batteriezelle (10, 12, 14, 16) nach Anspruch 8, wobei die Entlüftungsleiteinheit (400) umfasst:
eine mit der Gehäuseterrasse (T) gekoppelte erste Entlüftungsleiteinheit, welche in einer longitudinalen Richtung auf einer Seite der Batteriezelle (10, 12, 14, 16) angeordnet ist; und
eine mit der Gehäuseterrasse (T) gekoppelte zweite Entlüftungsleiteinheit, welche in der longitudinalen Richtung auf einer entgegengesetzten Seite der Batteriezelle (10, 12, 14, 16) angeordnet ist.

11. Batteriezelle (10, 12, 14, 16) nach Anspruch 10, wobei die Entlüftungsleiteinheit (400) ferner eine dritte Entlüftungsleiteinheit umfasst, welche mit einem Abschnitt des Dichtungsabschnitts (340) gekoppelt ist, welcher die Gehäuseterrasse (T), welche in der longitudinalen Richtung auf der Seite der Batteriezelle (10, 12, 14, 16) angeordnet ist, mit der Gehäuseterrasse (T) verbindet, welche in der longitudinalen Richtung auf der entgegengesetzten Seite der Batteriezelle (10, 12, 14, 16) angeordnet ist.

12. Batteriemodul (M), umfassend wenigstens eine Batteriezelle (10, 12, 14, 16) nach einem der Ansprüche 1 bis 11.

13. Batteriepack (P), umfassend wenigstens ein Batteriemodul (M) nach Anspruch 12.

14. Fahrzeug (A), umfassend wenigstens einen Batteriepack (P) nach Anspruch 13.

## Revendications

1. Élément de batterie (10, 12, 14, 16), comprenant :
un ensemble électrode (100) ;
une languette d'électrode (200) connectée à l'ensemble électrode (100) ; et
un boîtier d'élément (300) accueillant l'ensemble électrode (100), et configuré pour supporter la languette d'électrode (200) ; et
une unité de guidage de ventilation (400) disposée dans le boîtier d'élément (300), et configurée pour guider un gaz de ventilation à évacuer à travers une région prédéterminée du boîtier d'élément (300) lorsqu'une pression interne du boîtier d'élément (300) augmente,
dans lequel le boîtier d'élément (300) inclut une portion de réception (320) recevant l'ensemble électrode (100) et une portion de scellement (340) s'étendant sur une longueur prédéterminée depuis la portion de réception (320), et
dans lequel l'unité de guidage de ventilation (400) est disposée dans un palier de boîtier (T), le palier de boîtier (T) étant une région de la portion de scellement (340) disposée dans une direction dans laquelle est tirée la languette d'électrode (200),
**caractérisé en ce que** l'unité de guidage de ventilation (400) est configurée pour faciliter la formation d'un canal de ventilation (V) dans une portion du palier de boîtier (T) autre qu'une portion à laquelle est couplée l'unité de guidage de ventilation (400), le gaz de ventilation étant évacué par le canal de ventilation (V) lorsque la pression interne du boîtier d'élément (300) augmente.

2. Élément de batterie (10, 12, 14, 16) selon la revendication 1, dans lequel l'unité de guidage de ventilation (400) inclut un matériau qui durcit par conduction thermique à mesure que la température augmente à l'intérieur du boîtier d'élément (300).

3. Élément de batterie (10, 12, 14, 16) selon la revendication 1, dans lequel l'unité de guidage de ventilation (400) est couplée à une portion du palier de boîtier (T) où est disposée la languette d'électrode (200).

4. Élément de batterie (10, 12, 14, 16) selon la revendication 1, dans lequel l'unité de guidage de ventilation (400) est configurée pour être couplée sur un côté du palier de boîtier (T) et un côté opposé du palier de boîtier (T) dans le boîtier d'élément (300).

5. Élément de batterie (10, 12, 14, 16) selon la revendication 4, dans lequel l'unité de guidage de ventilation (400) est configurée pour recouvrir une partie d'un film conducteur (F) entre la languette d'électrode (200) et le palier de boîtier (T).

6. Élément de batterie (10, 12, 14, 16) selon la revendication 4, dans lequel l'unité de guidage de ventilation (400) est configurée pour recouvrir une partie de la languette d'électrode (200).

7. Élément de batterie (10, 12, 14, 16) selon la revendication 1, dans lequel l'unité de guidage de ventilation (400) est configurée pour faciliter la formation du canal de ventilation (V) dans une portion d'angle du palier de boîtier (T) lorsque la pression interne du boîtier d'élément (300) augmente.

8. Élément de batterie (10, 12, 14, 16) selon la revendication 7, dans lequel au moins certaines des portions d'angle du palier de boîtier (T) sont chanfreinées.

9. Élément de batterie (10, 12, 14, 16) selon la revendication 8, dans lequel la portion d'angle du palier de boîtier (T) disposée sous la languette d'électrode (200) est chanfreinée.

10. Élément de batterie (10, 12, 14, 16) selon la revendication 8, dans lequel l'unité de guidage de ventilation (400) inclut :
une première unité de guidage de ventilation couplée au palier de boîtier (T) disposé sur un côté de l'élément de batterie (10, 12, 14, 16) dans une direction longitudinale ; et
une deuxième unité de guidage de ventilation couplée au palier de boîtier (T) disposé sur un côté opposé de l'élément de batterie (10, 12, 14, 16) dans la direction longitudinale.

11. Élément de batterie (10, 12, 14, 16) selon la revendication 10, dans lequel l'unité de guidage de ventilation (400) inclut en outre une troisième unité de guidage de ventilation couplée à une portion de la portion de scellement (340) reliant le palier de boîtier (T) disposé sur le côté de l'élément de batterie (10, 12, 14, 16) dans la direction longitudinale au palier de boîtier (T) disposé sur le côté opposé de l'élément de batterie (10, 12, 14, 16) dans la direction longitudinale.

12. Module de batterie (M) comprenant au moins un élément de batterie (10, 12, 14, 16) selon l'une quelconque des revendications 1 à 11.

13. Bloc-batterie (P) comprenant au moins un module de batterie (M) selon la revendication 12.

14. Véhicule (A) comprenant au moins un bloc-batterie (P) selon la revendication 13.
